# EUROPEAN PATENT SPECIFICATION

(11) **EP 2 724 473 B1**
(45) Date of publication and mention of the grant of the patent: **24.01.2018**
(21) Application number: 12730768.4
(22) Date of filing: 21.06.2012
(51) Int. Cl.: H04B 1/00, H04B 1/403, H04W 88/06

(54) **DYNAMIC ANTENNA SHARING**
DYNAMISCHE ANTENNENTEILUNG
PARTAGE D'ANTENNES DYNAMIQUE

(30) Priority: 27.06.2011 US 201161501679 P; 08.12.2011 US 201113315135
(43) Date of publication of application: 30.04.2014
(73) Proprietor: Qualcomm Incorporated, San Diego, CA 92121-1714 (US)
(72) Inventor: HUSTED, Paul, San Jose, California 95110 (US); HIRSCH, Olaf J., San Jose, California 95110 (US)
(74) Representative: Wegner, Hans
(86) International application number: PCT/US2012/043629
(87) International publication number: WO 2013/003206

(56) References cited:
- US-A1- 2008 151 845
- US-A1- 2010 304 685

## Description

### TECHNICAL FIELD

The present embodiments relate generally to communication systems, and specifically to the dynamic sharing of antennas.

### BACKGROUND OF RELATED ART

Many wireless devices are capable of wireless communication with other devices using wireless local area network (WLAN) signals, Bluetooth (BT) signals, and/or cellular signals. For example, many laptops, netbook computers, mobile phones, and tablet devices use WLAN signals (also commonly referred to as Wi-Fi signals) to wirelessly connect to networks such as the Internet and/or private networks, and use Bluetooth signals to communicate with local BT-enabled devices such as headsets, printers, scanners, and the like. Wi-Fi communications are governed by the IEEE 802.11 family of standards, and Bluetooth communications are governed by the IEEE 802.15 family of standards. Wi-Fi and Bluetooth signals typically operate in the ISM band (e.g., 2.4-2.48 GHz). Further, many mobile communication devices (such as tablet devices and cellular phones) are also capable of wireless communication using cellular protocols such as long term evolution ("LTE") protocols, which typically operate in the range of 2.5 GHz.

To concurrently transmit both Wi-Fi signals and Bluetooth signals (e.g., to transmit information to the network via Wi-Fi signals while transmitting audio information to a BT-enabled headset), it is preferable to use a first external antenna for the transmission of the Wi-Fi signals, and to use a second external antenna for the transmission of the Bluetooth signals. With features such as active interference cancellation (AIC), it is possible to transmit on one antenna while receiving on the other, thus greatly improving throughput performance of the device. However, due to cost and/or space concerns, many mobile devices employ a single shared antenna for both Wi-Fi and Bluetooth signaling. Further, for mobile communication devices that are capable of communicating using LTE or other cellular phone protocols, an additional antenna is typically dedicated to handle only cellular communications.

Thus, although it is preferable to use separate (e.g., dedicated) antennas for Wi-Fi, Bluetooth, and LTE communications, many manufacturers of mobile communication devices have not been able to justify the additional cost and/or space required to implement separate antennas for LTE, Wi-Fi, and Bluetooth communications. Thus, there is a need to dynamically share antenna resources between Wi-Fi, Bluetooth, and LTE signals in a manner that does not degrade performance.

US 2008/151845 A relates to techniques for co-existence management of multiple radios. Disclosed is a system having a BT subsystem module, a WLAN subsystem module, a GSM/UMTS subsystem module, a shared antenna, another antenna, and a radio controller module. The shared antenna is connected between both BT subsystem module and WLAN subsystem module, where the other antenna is connected to GSM/UMTS subsystem module.

US 2010/304685 A1 relates to the control of multiple radios using a database of interference-related information. Disclosed is a wireless device supporting N radios with K antennas, and a switchplexer which may allocate the antennas to one or more active radios depending on which radios are active.

### BRIEF DESCRIPTION OF THE DRAWINGS

The present embodiments are illustrated by way of example and are not intended to be limited by the figures of the accompanying drawings, where:
FIG. 1 depicts wireless devices within which the present embodiments can be implemented;
FIG. 2 is a high-level block diagram of a wireless device capable of dynamically sharing antennas;
FIG. 3A is a block diagram of one embodiment of the wireless device of FIG. 2;
FIG. 3B is a block diagram of another embodiment of the wireless device of FIG. 2;
FIG. 3C is a block diagram of yet another embodiment of the wireless device of FIG. 2;
FIG. 4A is a more detailed diagram of one embodiment of the antenna sharing logic shown in FIG. 3A;
FIG. 4B is a more detailed diagram of another embodiment of the antenna sharing logic shown in FIG. 3A;
FIG. 5 is a flow chart depicting an exemplary operation of a wireless device dynamically sharing antennas in accordance with some embodiments; and
FIG. 6 is a flow chart depicting an exemplary operation of a wireless device dynamically sharing antennas in accordance with other embodiments.

Like reference numerals refer to corresponding parts throughout the drawing figures.

### DETAILED DESCRIPTION

The present embodiments are discussed below in the context of dynamically sharing antennas in a mobile communication device capable of transmitting and receiving Wi-Fi, Bluetooth, and long-term evolution (LTE) signals for simplicity only. It is to be understood that the present embodiments are equally applicable for dynamically sharing antennas used for transmitting signals of other various wireless standards or protocols. In the following description, numerous specific details are set forth such as examples of specific components, circuits, software and processes to provide a thorough understanding of the present disclosure. Also, in the following description and for purposes of explanation, specific nomenclature is set forth to provide a thorough understanding of the present embodiments. However, it will be apparent to one skilled in the art that these specific details may not be required to practice the present embodiments. In other instances, well-known circuits and devices are shown in block diagram form to avoid obscuring the present disclosure. The term "coupled" as used herein means connected directly to or connected through one or more intervening components or circuits. Any of the signals provided over various buses described herein may be time-multiplexed with other signals and provided over one or more common buses. Additionally, the interconnection between circuit elements or software blocks may be shown as buses or as single signal lines. Each of the buses may alternatively be a single signal line, and each of the single signal lines may alternatively be buses, and a single line or bus might represent any one or more of myriad physical or logical mechanisms for communication between components. Further, the logic levels assigned to various signals in the description below are arbitrary, and therefore may be modified (e.g., reversed polarity) as desired. For example, the asserted and de-asserted states of control signals can be reversed without departing from the scope of the present embodiments. Accordingly, the present embodiments are not to be construed as limited to specific examples described herein but rather include within their scope all embodiments defined by the appended claims.

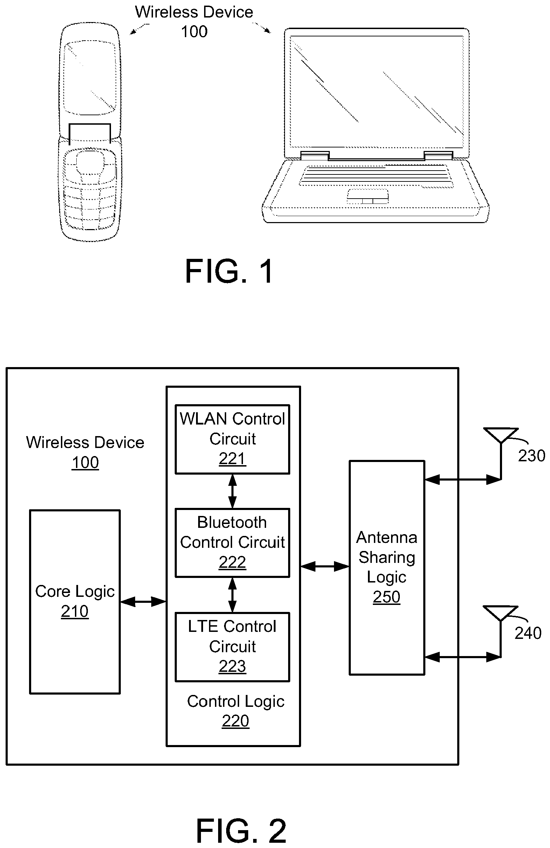

FIG. 1 shows wireless devices 100 such as a laptop and a cellular phone that can be configured to dynamically share antennas for transmitting and receiving wireless signals using different protocols. In addition to having both Wi-Fi and Bluetooth signaling capabilities, wireless devices 100 are also capable of communicating wirelessly over cellular data networks, for example, using long term evolution (LTE) and/or other suitable cellular communication protocols. Although not shown for simplicity, the wireless devices 100 can include other devices such as a tablet computer, a desktop computer, PDAs, and so on. For some embodiments, wireless devices 100 can use Wi-Fi signals to exchange data with the Internet, LAN, WLAN, and/or VPN, can use Bluetooth signals to exchange data with local BT-enabled devices such as headsets, printers, scanners, and can use LTE signals to implement cellular phone communication with other devices.

FIG. 2 is a high-level functional block diagram of the wireless device 100 shown to include core logic 210, transceiver control logic 220, two or more antennas 230 and 240, and antenna sharing logic 250. The core logic 210, which can include well-known elements such as processors and memory elements, performs general data generation and processing functions for the wireless device 100. The transceiver control logic 220 includes a WLAN control circuit 221, a Bluetooth control circuit 222, and a LTE control circuit 223, and is coupled to core logic 210 and is coupled to external antennas 230 and 240 via antenna sharing logic 250. The WLAN control circuit 221 is configured to control the transmission and reception of Wi-Fi signals for device 100. The Bluetooth control circuit 222 is configured to control the transmission and reception of Bluetooth signals for device 100. The LTE control circuit 223 is configured to control the transmission and reception of LTE or other cellular signals for device 100. The various components (not shown for simplicity) within core logic 210, WLAN control circuit 221, Bluetooth control circuit 222, and/or LTE control circuit 223 can be implemented in a variety of ways including, for example, using analog logic, digital logic, processors (e.g., CPUs, DSPs, microcontrollers, and so on), application specific integrated circuits (ASICs), field programmable gate arrays (FPGAs), or any combination of the above. For purposes of this disclosure, control logic 220 can include not only digital processing circuitry but also analog (e.g., RF) processing circuitry.

In accordance with the present embodiments, antenna sharing logic 250 can selectively couple the WLAN control circuit 221, the Bluetooth control circuit 222, and the LTE control circuit 223 to the antennas 230 and/or 240. For some embodiments, when one of the WLAN control circuit 221, the Bluetooth control circuit 222, or the LTE control circuit 223 is not transmitting or receiving data, the antenna sharing logic 250 provisions the antennas 230 and 240 for use by the other two control circuits, for example, so that each of the other two control circuits is effectively coupled to a dedicated antenna (described in greater detail below). Further, although shown in FIG. 2 as separate components, the WLAN control circuit 221, the Bluetooth control circuit 222, and/or the LTE control circuit 223 can be implemented on the same integrated circuit (IC) chip. For other embodiments, the WLAN control circuit 221, the Bluetooth control circuit 222, and/or the LTE control circuit 223 can share one or more components on the same chip. For some embodiments, the core logic 210, the transceiver control logic 220, and the antenna sharing logic 250 can all be implemented on the same IC chip.

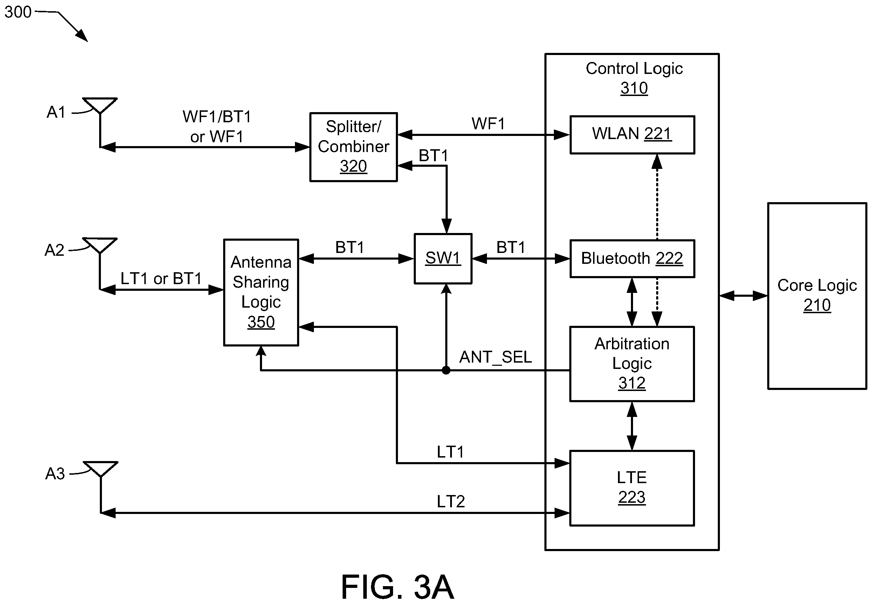

During normal transmission operations of device 100, the core logic 210 provides data for transmission according to the Wi-Fi protocol to the WLAN control circuit 221, provides data for transmission according to the Bluetooth protocol to the Bluetooth control circuit 222, and provides data for transmission according to the LTE protocol to the LTE control circuit 223. More specifically, for some embodiments, the WLAN control circuit 221 uses data received from the core logic 210 to generate a Wi-Fi signal that can be broadcast by a first antenna (e.g., according to well-known Wi-Fi protocols). Similarly, the Bluetooth control circuit 222 uses data received from the core logic 210 to generate a Bluetooth signal that can be broadcast by the first antenna (e.g., according to well-known Bluetooth protocols). For some embodiments, a signal splitter/combiner circuit (not shown in FIG. 2 for simplicity) can be used to transmit the Wi-Fi signal and the Bluetooth signal via the first antenna at the same time, for example, as described in more detail below with respect to FIG. 3A. The LTE control circuit 223 uses data provided by core logic 210 to generate LTE signals that can be broadcast by the second antenna (e.g., according to well-known LTE protocols).

The LTE control circuit 223 typically handles cellular communications, and may experience regular periods of idle time (e.g., when not receiving or sending any calls). Thus, rather than allowing the second antenna to remain unused during such idle times, the antenna sharing logic 250 can selectively associate (e.g., couple) either the Bluetooth signal or the Wi-Fi signal to the second antenna when the LTE circuit 223 is not transmitting or receiving data. In this manner, the antenna sharing logic 250 can essentially arbitrate a dedicated antenna for each of the WLAN control circuit 221 and the Bluetooth control circuit 222 during LTE idle times, thereby allowing the wireless device 100 to communicate Bluetooth signals and Wi-Fi signals with other devices using separate antennas.

For some embodiments, when the LTE control circuit 223 begins transmitting and/or receiving LTE data (e.g., indicating an end of the LTE idle time), the antenna sharing logic 250 can resume normal operation by associating the LTE signals with the second antenna and by associating both the Wi-Fi signal and the Bluetooth signal with the first antenna. In this manner, the second antenna is made available to the LTE control 223 when the LTE control circuit 223 begins transmitting and/or receiving LTE data.

FIG. 3A shows a wireless device 300 that is one embodiment of device 100 of FIG. 2. The wireless device 300 includes core logic 210, transceiver control logic 310, antenna sharing logic 350, a set of three antennas A1-A3, a Bluetooth switch SW1, and a well-known signal splitter/combiner circuit 320. The antennas A1-A3 are well-known. The transceiver control logic 310, which is one embodiment of transceiver control logic 220 of FIG. 2, is shown to include WLAN control circuit 221, Bluetooth control circuit 222, LTE control circuit 223, and arbitration logic 312. Transceiver control logic 310 is also shown coupled to the core logic 210. The WLAN control circuit 221, which is coupled to the first antenna A1 via signal splitter/combiner circuit 320, is configured to generate a Wi-Fi signal WF1 for broadcast via antenna A1 during transmit operations, and is configured to receive Wi-Fi signals WF1 during receive operations.

The Bluetooth control circuit 222, which is selectively coupled to the first antenna A1 through signal splitter/combiner circuit 320 via switch SW1 and is selectively coupled to the second antenna A2 via antenna sharing logic 350 and switch SW1, is configured to generate a Bluetooth signal BT1 for broadcast via antenna A1 or antenna A2 during transmit operations, and is configured to receive Bluetooth signals from either antenna A1 or antenna A2 during receive operations.

Although not shown for simplicity, the Bluetooth signal BT1 can be amplified by a suitable BT power amplifier, and the Wi-Fi signal WF1 can be amplified by a suitable Wi-Fi power amplifier. For other embodiments, separate power amplifiers for the signals BT1 and WF1 can be omitted, and the output of the splitter/combiner circuit 320 can be provided to the input of a suitable power amplifier (not shown for simplicity) having an output coupled to the first antenna A1.

During normal transmit operations, the splitter/combiner circuit 320 receives the Wi-Fi signal WF1 from WLAN control circuit 221, receives the Bluetooth signal BT1 from Bluetooth control circuit 222, and combines the Wi-Fi signal WF1 and the Bluetooth signal BT1 into a combined WF1/BT1 signal for wireless communication to another device via first antenna A1 in a well-known manner. During receive operations, the splitter/combiner circuit 320 receives a combined WF1/BT1 signal from first antenna A1, and splits the signal into its separate WLAN and BT components so that the received Wi-Fi signal WF1 is provided to WLAN control circuit 221 and the received Bluetooth signal BT1 is provided to Bluetooth control circuit 222.

The LTE control circuit 223 is selectively coupled to the second antenna A2 via antenna sharing logic 350, and is coupled to third antenna A3. Thus, for the exemplary embodiment described herein, LTE control circuit 223 generates first and second LTE signals LT1 and LT2, whereby the first signal LT1 is selectively provided to second antenna A2 via antenna sharing logic 350, and the second signal LT2 is provided to third antenna A3. Although not shown for simplicity, each of antennas A2 and A3 may also be coupled to a respective power amplifier.

The Bluetooth switch SW1, which can be any suitable RF switch, includes a first port coupled to Bluetooth control circuit 222, a second port coupled to the splitter/combiner circuit 320, a third port coupled to the antenna sharing logic 350, and a control input to receive an antenna select signal ANT_SEL. The select signal ANT_SEL determines whether switch SW1 couples Bluetooth control circuit 222 either to combiner/splitter circuit 320 or to antenna sharing logic 350. For example, when switch SW1 is in a first state (e.g., in response to an asserted state of ANT_SEL), switch SW1 connects Bluetooth control circuit 222 to combiner/splitter circuit 320 so that during normal transmit operations BT signals output from Bluetooth control circuit 222 are routed to combiner/splitter circuit 320 and thereafter combined with WF1 for broadcast via antenna A1, and so that during normal receive operations BT signals received from antenna A1 and split by combiner/splitter circuit 320 are routed to Bluetooth control circuit 222. Conversely, when switch SW1 is in a second state (e.g., in response to a de-asserted state of ANT_SEL), switch SW1 connects Bluetooth control circuit 222 to antenna sharing logic 350 so that during transmit operations BT signals output from Bluetooth control circuit 222 are routed to antenna sharing logic 350 and thereafter broadcast via antenna A2, and so that during receive operations BT signals received from antenna A2 via antenna sharing logic 350 are routed to Bluetooth control circuit 222.

The antenna sharing logic 350 is coupled between antennas A1-A2 and the transceiver control logic 310. In the specific embodiment shown, the antenna sharing logic 350 includes a first port selectively coupled to Bluetooth control circuit 222 via switch SW1, includes a second port coupled to the LTE control circuit 223, includes a third port coupled to second antenna A2, and includes a control input to receive the select signal ANT_SEL. The select signal ANT_SEL, which can configure the antenna sharing logic 350 (and switch SW1) to operate in either an "LTE antenna sharing" mode or an "LTE pass-thru" mode, can be generated by arbitration logic 312. For some embodiments, the antenna sharing logic 350 and the switch SW1 form switching logic that selectively routes the Bluetooth signal either to first antenna A1 or to second antenna A2.

Arbitration logic 312, which includes ports coupled to LTE control circuit 223, to Bluetooth control circuit 222, and to WLAN control circuit 221, is configured to arbitrate access to second antenna A2 between LTE control circuit 223 and Bluetooth control circuit 222. For some embodiments, arbitration logic 312 can receive scheduling information that indicates LTE transmission and/or reception schedules, and in response thereto can determine idles times during which the LTE signal LT1 is not being used. The scheduling information can be preprogrammed according to a wireless carrier's or device manufacturer's specifications, or can be provided by the LTE control circuit 223. For one embodiment, the arbitration logic 312 can include a lookup table that stores scheduling information for the LTE signals. Further, for some embodiments, the arbitration logic 312 can receive a notification from the LTE control circuit 223 when it is about to start or stop transmitting and/or receiving information to and/or from another mobile communication device.

In accordance with the present embodiments, arbitration logic 312 can use the LTE idles times as an opportunity to grant the Bluetooth control circuit 222 (or alternatively the WLAN control circuit 221) access to second antenna A2 to maximize the antenna resources of device 300. Arbitration logic 312 can monitor the progress of Bluetooth transmissions/receptions during these LTE idle times and, in response thereto, selectively grant access to antenna A2 back to the LTE control circuit 223 (e.g., after all or some portion of the current BT operation has been completed). For some embodiments, arbitration logic 312 can also be used to adjust one or more settings (e.g., gain tables, calibration values, and so on) in the BT and/or LTE transmit/receive (Tx/Rx) chains depending upon whether LTE or Bluetooth is using the second antenna A2. For one embodiment, arbitration logic 312 can also adjust one or more settings of the WLAN Tx/Rx chain in response to the antenna arbitration.

As mentioned above, the select signal ANT_SEL generated by arbitration logic 312 can be used to configure the antenna sharing logic 350 to operate in either an "LTE antenna sharing" mode or an "LTE pass-thru" mode (e.g., depending upon whether there is an LTE idle period). When the select signal ANT_SEL is in the first (e.g., asserted) state to indicate the LTE pass-thru mode, the switch SW1 couples the Bluetooth control circuit 222 to the splitter/combiner circuit 320 and de-couples the Bluetooth control circuit 222 from the antenna sharing logic 350, thereby routing the BT1 signal from Bluetooth control circuit 222 to splitter/combiner circuit 320 to be combined with the Wi-Fi signal WF1 and thereafter wirelessly broadcast from first antenna A1. The asserted state of ANT_SEL also causes the antenna sharing logic 350 to route the first LTE signal LT1 to the second antenna A2 (e.g., while the second LTE signal LT2 is provided directly from LTE control circuit 223 to the third antenna A3). More specifically, in the pass-thru mode, first antenna A1 handles the communication of the Bluetooth signal BT1 and the Wi-Fi signal WF1 via signal splitter/combiner circuit 320, second antenna A2 handles the communication of the first LTE signal LT1, and third antenna A3 handles the communication of the second LTE signal LT2. Thus, in the pass-thru mode, the Bluetooth signal BT1 and the Wi-Fi signal WF1 both use first antenna A1, the LT1 signal uses second antenna A2 as a dedicated antenna, and the second LTE signal LT2 uses third antenna A3 as a dedicated antenna.

When the select signal ANT_SEL is in the second (e.g., de-asserted) state to indicate the antenna sharing mode, the switch SW1 de-couples the Bluetooth control circuit 222 from the splitter/combiner circuit 320 and couples the Bluetooth control circuit 222 to the antenna sharing logic 350, thereby routing the BT1 signal from Bluetooth control circuit 222 to antenna sharing logic 350. The de-asserted state of ANT_SEL also causes the antenna sharing logic 350 to couple the Bluetooth signal BT1 to the second antenna A2, thereby effectively routing the Bluetooth signal BT1 (e.g., rather than the LT1 signal) to the second antenna A2. More specifically, in the antenna sharing mode, first antenna A1 handles the communication of the Wi-Fi signal WF1, second antenna A2 handles the communication of the Bluetooth signal BT1, and third antenna A3 handles the communication of the second LTE signal LT2. Thus, in the antenna sharing mode, the Wi-Fi signal WF1 uses first antenna A1 as a dedicated antenna, the Bluetooth signal BT1 uses second antenna A2 as a dedicated antenna, and the second LTE signal LT2 uses third antenna A3 as a dedicated antenna. In this manner, the second antenna A2 (which normally handles LTE signals LT1) is arbitrated to the Bluetooth signal BT1 so that the Wi-Fi signal WF1 and the Bluetooth signal BT1 can use separate antennas A1 and A2, respectively. For some embodiments, the de-asserted state of ANT_SEL can also be used to de-couple the LTE control circuit 223 from antenna sharing logic 350 and/or to power-down LTE circuit components associated with the LT1 chain.

Further, during the antenna sharing mode, the arbitration logic 312 can alert the Bluetooth control circuit 222 that is has been granted access to second antenna A2, for example, so that adjustments to calibration settings and/or gain tables associated with the BT chain can be made accordingly. Similarly, during the antenna sharing mode, the arbitration logic 312 can alert the WLAN control circuit 221 that Bluetooth has been granted access to second antenna A2, for example, so that adjustments to calibration settings and/or gain tables associated with the WLAN chain can be made accordingly (e.g., to reflect the current situation in which the Wi-Fi signal WF1 is not being combined with the signal BT1 in the combiner/splitter circuit 320).

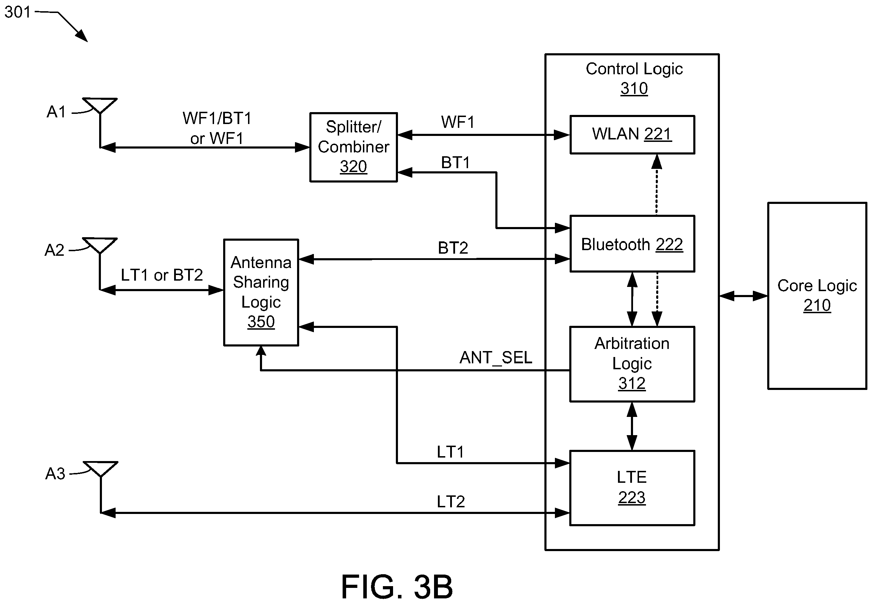

For other embodiments, device 300 can include an additional Bluetooth RF output pin having separate logic that allows the Bluetooth control circuit 222 to select which RF chain to use for Bluetooth signal communications. For example, FIG. 3B shows a wireless device 301 that is another embodiment of wireless device 100. Wireless device 301 is similar to wireless device 300 of FIG. 3A, except that the Bluetooth control circuit 222 is configured to include an additional port for handling a second Bluetooth signal BT2, which as described below allows the Bluetooth switch SW1 to be omitted. For example, during the LTE pass-thru mode, the Bluetooth control circuit 222 can enable the first port to communicate the BT1 signal with first antenna A1 via combiner/splitter circuit 320, and can disable the second port so that no BT signal is provided to antenna sharing logic 350. Then, during the antenna sharing mode, the Bluetooth control circuit 222 can disable the first port so that BT signals are neither provided to nor received from first antenna A1 via combiner/splitter circuit 320, and can enable the second port so that the BT signal is provided as BT2 to second antenna A2 via antenna sharing logic 350.

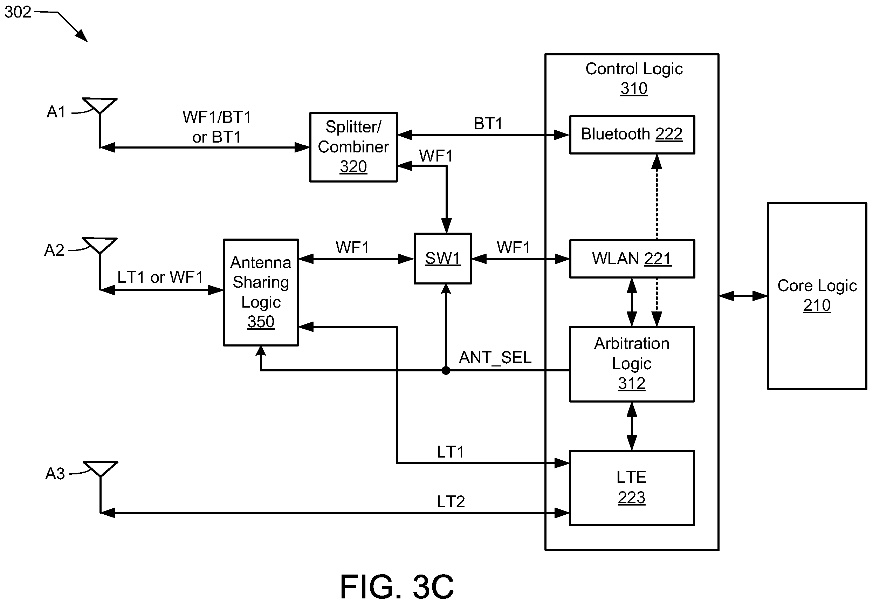

It is noted that while the exemplary embodiments of FIGS. 3A-3B depict the antenna sharing logic 350 as being configured to selectively couple the Bluetooth control circuit 222 to the second antenna A2, in alternative embodiments, the antenna sharing logic 350 may be configured to selectively couple the WLAN control circuit 221 to the second antenna A2. This alternate configuration 302, which is depicted in FIG. 3C, can be used in applications where WLAN packet loss resulting from the sudden or premature switching of second antenna A2 back to the LT1 chain is preferable to corresponding Bluetooth packet loss (e.g., for applications in which audio data transmitted via Bluetooth signals is deemed to be of a higher priority than non-audio data transmitted via WLAN signals).

Furthermore, while the LTE control circuit 223 is shown coupled to two antennas A2 and A3, in alternative embodiments the LTE control circuit 223 may be coupled to just a single antenna (e.g., the second antenna A2). In still further embodiments, the LTE control circuit 223 may include a control circuit for any type of cellular communications protocol (e.g., EDGE, UMTS, WiMax, etc.).

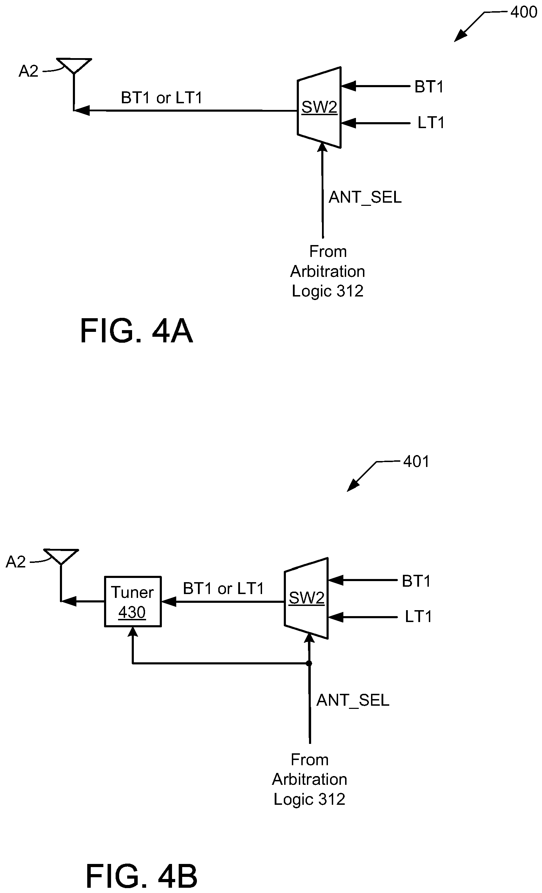

FIG. 4A shows antenna sharing logic 400 that is one embodiment of the antenna sharing logic 350 shown in FIG 3A. The antenna sharing logic 400 is depicted as a second switch SW2. The switch SW2, which includes a first port coupled to the BT1 signal, a second port coupled to the first LTE signal LT1, a control input to receive the antenna select signal ANT_SEL, and a third port coupled to the second antenna A2, selectively couples either the Bluetooth signal BT1 or the first LTE signal LT1 to the second antenna A2 in response to the antenna select signal ANT_SEL. The switch SW2 can be any suitable RF switch. For some embodiments, the switch SW2 may be implemented as a 2:1 multiplexer (e.g., as depicted in FIG. 4A).

In some embodiments, the LTE signals LT1 and LT2 may be broadcast at a different frequency than the Bluetooth signal BT1 (and the Wi-Fi signal WF1). For example, most Bluetooth signals operate in the 2.4-2.48 GHz frequency band, whereas LTE signals typically operate at about 2.5 GHz. Thus, the antennas used for broadcasting LTE signals may be tuned to a slightly different frequency than those used for broadcasting Bluetooth signals. To compensate for this difference, a tuning circuit is provided in some embodiments.

For example, FIG. 4B shows antenna sharing logic 401 that is another embodiment of antenna sharing logic 350 of FIG. 3A. Antenna sharing logic 401 includes all the components of antenna sharing logic 400 of FIG. 4A, plus the addition of a tuner circuit 430 that can be used to selectively tune the second antenna A2. More specifically, the tuning circuit 430 adjusts the resonance frequency of the second antenna A2 depending on the mode of operation (e.g., pass-thru or antenna sharing). For example, when the antenna sharing logic 400 operates in the pass-thru mode, the antenna A2 is to broadcast and/or receive the LT1 signal. The tuning circuit 430 may be inactive or simply leave the second antenna A2 alone (or, alternatively, the tuning circuit 430 may configure the second antenna A2 to operate at 2.5 GHz). However, when the antenna sharing logic 400 operates in the antenna sharing mode, the second antenna A2 is to transmit and/or receive the Bluetooth signal BT1. In this scenario, the tuning circuit 430 may become activated and tune the second antenna A2 to operate in the Bluetooth frequency range (e.g., between 2.4 GHz and 2.48 GHz). It should be noted that because the frequency ranges for Bluetooth/Wi-Fi and LTE signals are so close to each other, for most applications, the tuning circuit 430 can be omitted without a noticeable effect on the second antenna's ability to broadcast and/or receive the Bluetooth signals BT1. For other embodiments, the tuner circuit 430 can select between two or more different cellular co-existence filters; for such embodiments, the Bluetooth control circuit 222 may use a first filter that passes signals having a frequency of 2.48 GHz while rejecting signals in the LTE and cellular frequency bands, and the LTE control circuit 223 may use a second filter that passes signals having a frequency of 2.5 GHz while rejecting signals in the BT and Wi-Fi frequency bands.

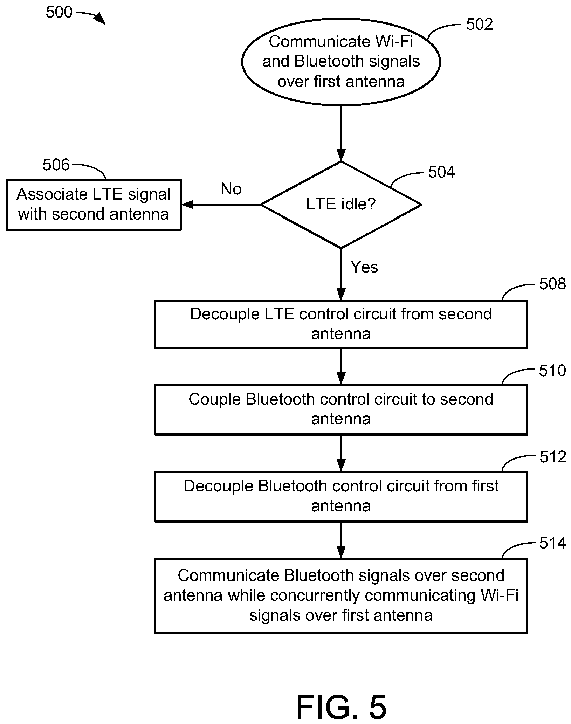

FIG. 5 is a flow chart 500 depicting an exemplary operation of wireless device 300 when switching from the normal (pass-thru) mode to the antenna sharing mode. At 502, the WLAN control circuit 221 and the Bluetooth control circuit 222 are both coupled to and communicate data to the first antenna A1. Then, at 504, the antenna sharing logic 350 determines whether the LTE control circuit 223 is idle. In some embodiments, the antenna sharing logic 350 receives antenna select signal ANT_SEL indicating whether the LTE control circuit 223 is active or idle. The antenna select signal ANT_SEL may be provided, for example, by the LTE control circuit 223. Alternatively, the antenna select signal ANT_SEL may be generated from LTE scheduling information stored in a lookup table. As mentioned above, for some embodiments, the LTE scheduling information can be provided by cellular components (e.g., LTE control circuit 223) within the device 300.

If the LTE control circuit 223 is transmitting and/or receiving LTE signals LT1 and LT2 (e.g., the antenna select signal ANT_SEL is asserted), the antenna sharing logic 350 continues to associate the LT1 signal with the second antenna A2, at 506. Conversely, if the LTE control circuit 223 is idle (e.g., the antenna select signal ANT_SEL is de-asserted), the antenna sharing logic 350 decouples the LTE control circuit 223 from the second antenna A2, at 508, and couples the Bluetooth control circuit 222 to the second antenna A2, at 510. For some embodiments, the LTE control circuit 223 can be powered down in response to de-assertion of the antenna select signal. The Bluetooth switch SW1 decouples the Bluetooth control circuit 222 from the first antenna A1, at 512. In this manner, the antenna sharing logic 350 allows for the communication of Bluetooth signals BT1 over the second antenna A2 concurrently with the communication of Wi-Fi signals WF1 over the first antenna A1, at 514.

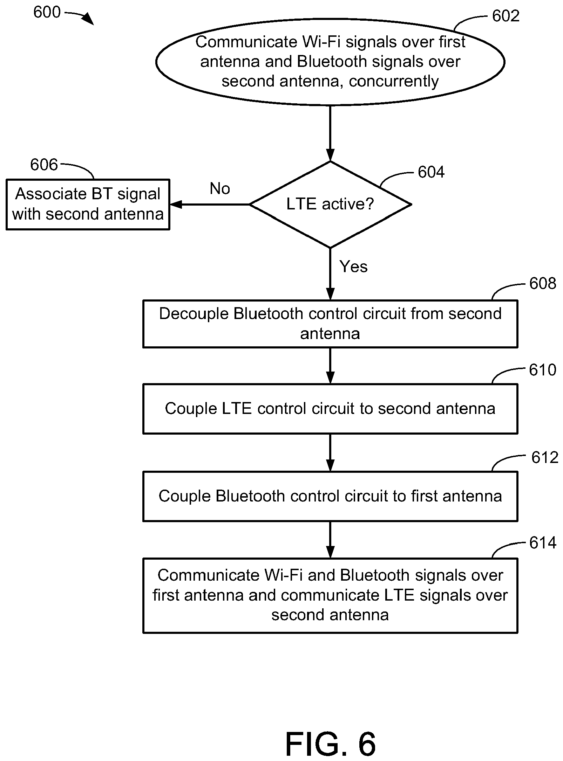

FIG. 6 is a flow chart 600 depicting an exemplary operation of wireless device 300 when switching from the antenna sharing mode to the normal (pass-thru) mode. At 602, the WLAN control circuit 221 and the Bluetooth control circuit 222 concurrently communicate Wi-Fi signals WF1 and Bluetooth signals BT1 over the first and second antennas A1 and A2, respectively. Then, at 604, the arbitration logic 312 determines whether the LTE control circuit 223 is active. In some embodiments, the antenna sharing logic 350 receives antenna select signal ANT_SEL indicating whether the LTE control circuit 223 is active or idle. The antenna select signal ANT_SEL may be provided, for example, by the LTE control circuit 223, as described above. Alternatively, the antenna select signal ANT_SEL may be determined from a lookup table storing scheduling information for the LTE control circuit 223.

If the LTE control circuit 223 is not transmitting and/or receiving LTE signals LT1 and LT2 (e.g., the antenna select signal ANT_SEL is de-asserted), the antenna sharing logic 350 continues to associate the BT1 signal with the second antenna A2, at 606. On the other hand, if the LTE control circuit 223 is active (e.g., the antenna select signal ANT_SEL is asserted), the antenna sharing logic 350 decouples the Bluetooth control circuit 222 from the second antenna A2, at 608, and couples the LTE control circuit 223 to the second antenna A2, at 610. The Bluetooth switch SW1 couples the Bluetooth control circuit 222 back to the first antenna A1, at 612, to enable Wi-Fi signals WF1 and Bluetooth signals BT1 to be communicated over the first antenna A1 while LTE signals LT1 and LT2 are communicated over the second and third antennas A2 and A3, respectively, at 614.

Note that, while the embodiments above have been described specifically with respect to the transmission of Wi-Fi, Bluetooth, and LTE signals, the method described in FIGS. 5 and 6 applies similarly for the reception of Wi-Fi, Bluetooth, and/or LTE signals. In alternative embodiments, the Wi-Fi control circuit 221 (rather than the Bluetooth control circuit 222) may be selectively decoupled from the first antenna A1 and coupled to the second antenna A2 during the antenna sharing mode (e.g., while there is an idle time associated with the first LTE signals LT1). Furthermore, the LTE control circuit 223 may alternatively transmit and receive data in accordance with other cellular data protocols (e.g., EDGE, UMTS, WiMax, etc.).

## Claims

1. A wireless communication device (100), comprising:
control logic (220) configured to generate cellular signals, first non-cellular signals, and second non-cellular signals for wireless transmission to another device;
first and second antennas (230, 240); and
switching logic (250), coupled to the control logic (220) and to the first and second antennas (230, 240), configured to route the first and second non-cellular signals to the first antenna (230) and to route the cellular signals to the second antenna (240) during a normal mode, and configured to route the first non-cellular signal to the first antenna (230) and to route the second non-cellular signal to the second antenna (240) during a sharing mode when there is an idle time associated with the transmission or reception of the cellular signals;
wherein the switching logic (250) is responsive to transmit/receive scheduling information associated with the cellular and non-cellular signals and stored in a lookup table.

2. The device of Claim 1, wherein the first non-cellular signals comprise Bluetooth signals, and the second non-cellular signals comprise Wi-Fi signals.

3. The device of Claim 1, wherein during the sharing mode, the switching logic (250) does not route the cellular signals to the second antenna (240).

4. The device of Claim 1, wherein the switching logic (250) comprises:
a switch having a first port to receive the first non-cellular signals from the core logic (210), a second port coupled to the first antenna (230), a third port, and a control input to receive an antenna select signal; and
antenna sharing logic having a first port to receive the cellular signals from the core logic (210), a second port coupled to the third port of the switch, a third port coupled to the second antenna (240), and a control input to receive the antenna select signal.

5. The device of Claim 4, wherein the antenna select signal is de-asserted to indicate the sharing mode in response to detection of an idle time associated with the communication of the cellular signals.

6. The device of Claim 4, further comprising:
arbitration logic (312) configured to selectively de-assert the antenna select signal in response to transmit/receive scheduling information of the cellular signal.

7. The device of Claim 6, wherein the arbitration logic (312) is further configured to selectively adjust a gain setting of the non-cellular signals in response to the antenna select signal.

8. The device of Claim 6, wherein the arbitration logic (312) is further configured to selectively assert the antenna select signal in response to a transmission schedule of the first non-cellular signal.

9. The device of Claim 6, wherein the arbitration logic (312) is further configured to provide the cellular signal's transmit/receive scheduling information to control circuitry associated with the non-cellular signals.

10. A method of operating a wireless communication device (100), the method comprising:
communicating Bluetooth and Wi-Fi signals to another device via a first antenna (230) and communicating cellular signals to the other device via a second antenna (240) during a normal mode;
entering an antenna sharing mode when there is an idle time associated with the transmission or reception of the cellular signals; and
communicating the Wi-Fi signals to the other device via the first antenna (230) and communicating the Bluetooth signals to the other device via the second antenna (240) during the antenna sharing mode;
wherein the entering comprises: monitoring a lookup table storing scheduling information for the transmission and reception of the cellular signals to determine whether the idle time exists.

11. The method of Claim 10, wherein the cellular signals are not transmitted via the second antenna (240) during the antenna sharing mode.

12. The method of Claim 10, wherein the entering further comprises:
asserting an antenna select signal, in response to the scheduling information, to initiate the antenna sharing mode.

13. The method of Claim 10, further comprising:
providing the cellular signal scheduling information to control circuitry associated with the Bluetooth and Wi-Fi signals; and
selectively adjusting a gain setting of the control circuitry in response to the cellular signal scheduling information.

## Patentansprüche

1. Eine drahtlose Kommunikationsvorrichtung (100), umfassend:
Steuerlogik (220), konfiguriert zum Erzeugen zellulärer Signale, erster nicht-zellulärer Signale und zweiter nicht-zellulärer Signale zur drahtlosen Übertragung an eine andere Vorrichtung;
erste und zweite Antennen (230, 240); und
Schaltlogik (250), die mit der Steuerlogik (220) und der ersten und zweiten Antenne (230, 240) verbunden ist, konfiguriert zum Routen der ersten und zweiten nicht-zellulären Signale zu der ersten Antenne (230) und zum Routen der zellulären Signale zu der zweiten Antenne (240) während eines normalen Modus, sowie konfiguriert zum Routen der ersten nicht-zellulären Signale zu der ersten Antenne (230) und zum Routen der zweiten nicht-zellulären Signale zu der zweiten Antenne (240) während eines Teilen-Modus, wenn eine Leerlaufzeit in Bezug auf die Übertragung oder den Empfang der zellulären Signale besteht;
wobei die Schaltlogik (250) auf Übertragungs-/Empfangs-Scheduling-Informationen, welche mit den zellulären und nicht-zellulären Signalen assoziiert sind und in einer Lookup-Tabelle gespeichert sind, reaktiv ist.

2. Die Vorrichtung nach Anspruch 1, wobei die ersten nicht-zellulären Signale Bluetooth-Signale umfassen und die zweiten nicht-zellulären Signale Wi-Fi-Signale umfassen.

3. Die Vorrichtung nach Anspruch 1, wobei während des Teilen-Modus die Schaltlogik (250) die zellulären Signale nicht zu der zweiten Antenne (240) routet.

4. Die Vorrichtung nach Anspruch 1, wobei die Schaltlogik (250) umfasst:
eine Schaltung mit einem ersten Port zum Empfangen der ersten nicht-zellulären Signale von der Kernlogik (210), einen mit der ersten Antenne (230) verbundenen zweiten Port, einen dritten Port und einen Steuereingang zum Empfangen eines Antennenauswahlsignals; und
Antennenteilungslogik mit einem ersten Port zum Empfangen der zellulären Signale von der Kernlogik (210), einen mit dem dritten Port der Schaltung verbundenen zweiten Port, einen mit der zweiten Antenne (240) verbundenen dritten Port und einen Steuereingang zum Empfangen des Antennenauswahlsignals.

5. Die Vorrichtung nach Anspruch 4, wobei das Antennenauswahlsignal nicht belegt wird zum Anzeigen des Teilen-Modus in Antwort auf ein Detektieren einer Leerlaufzeit in Bezug auf die Kommunikation der zellulären Signale.

6. Die Vorrichtung nach Anspruch 4, ferner umfassend:
Entscheidungslogik (312), konfiguriert zum selektiven Nicht-Belegen des Antennenauswahlsignals in Antwort auf Übertragungs-/Empfangs-Scheduling-Informationen des zellulären Signals.

7. Die Vorrichtung nach Anspruch 6, wobei die Entscheidungslogik (312) ferner konfiguriert ist zum selektiven Einstellen einer Verstärkungseinstellung der nicht-zellulären Signale in Antwort auf das Antennenauswahlsignal.

8. Die Vorrichtung nach Anspruch 6, wobei die Entscheidungslogik (312) ferner konfiguriert ist zum selektiven Belegen des Antennenauswahlsignals in Antwort auf eine Übertragungszeitplanung der ersten nicht-zellulären Signale.

9. Die Vorrichtung nach Anspruch 6, wobei die Entscheidungslogik (312) ferner konfiguriert ist zum Bereitstellen der Übertragungs-/Empfangs-Scheduling-Informationen der zellulären Signale an eine Steuerschaltung, welche mit den nicht-zellulären Signalen assoziiert ist.

10. Ein Verfahren zum Betreiben einer drahtlosen Kommunikationsvorrichtung (100), wobei das Verfahren umfasst:
Kommunizieren von Bluetooth- und Wi-Fi-Signalen zu einer anderen Vorrichtung über eine erste Antenne (230) und Kommunizieren von zellulären Signalen zu der anderen Vorrichtung über eine zweite Antenne (240) während eines normalen Modus;
Betreten eines Antennen-Teilungs-Modus, wenn eine Leerlaufzeit in Bezug auf die Übertragung oder den Empfang der zellulären Signale besteht; und
Kommunizieren der Wi-Fi-Signale zu der anderen Vorrichtung über die erste Antenne (230) und Kommunizieren der Bluetooth-Signale zu der anderen Vorrichtung über die zweite Antenne (240) während des Antennen-Teilungs-Modus;
wobei das Betreten umfasst: Überwachen einer Lookup-Tabelle, welche Scheduling-Informationen für die Übertragung oder den Empfang der zellulären Signale speichert, zum Bestimmen, ob die Leerlaufzeit besteht.

11. Das Verfahren nach Anspruch 10, wobei die zellulären Signale während des Antennen-Teilungs-Modus nicht über die zweite Antenne (240) übertragen werden.

12. Das Verfahren nach Anspruch 10, wobei das Betreten ferner umfasst:
Belegen eines Antennenauswahlsignals in Antwort auf die Scheduling-Informationen zum Initiieren des Antennen-Teilungs-Modus.

13. Das Verfahren nach Anspruch 10, ferner umfassend:
Bereitstellen der Zellulärsignal-Scheduling-Informationen an eine Steuerschaltung, welche mit den Bluetooth- und Wi-Fi-Signalen assoziiert ist; und
selektives Einstellen einer Verstärkungseinstellung der Steuerschaltung in Antwort auf die Zellulärsignal-Scheduling-Informationen.

## Revendications

1. Dispositif de communication sans fil (100) comprenant :
une logique de commande (220) configurée pour générer des signaux cellulaires, des premiers signaux non cellulaires et des deuxièmes signaux non cellulaires pour une transmission sans fil à un autre dispositif ;
des première et deuxième antennes (230, 240) ; et
une logique de commutation (250), couplée à la logique de commande (220) et aux première et deuxième antennes (230, 240), configurée pour acheminer les premiers et deuxièmes signaux non cellulaires à la première antenne (230) et pour acheminer les signaux cellulaires à la deuxième antenne (240) durant un mode normal, et configurée pour acheminer le premier signal non cellulaire à la première antenne (230) et pour acheminer le deuxième signal non cellulaire à la deuxième antenne (240) durant un mode de partage quand il existe un temps d'inactivité associé à la transmission ou la réception des signaux cellulaires ;
dans lequel la logique de commutation (250) est sensible à des informations de programmation de transmission/réception associées aux signaux cellulaires et non cellulaires et stockées dans une table de consultation.

2. Dispositif selon la revendication 1, dans lequel les premiers signaux non cellulaires comprennent des signaux Bluetooth et les deuxièmes signaux non cellulaires comprennent des signaux Wifi.

3. Dispositif selon la revendication 1, dans lequel, durant le mode de partage, la logique de commutation (250) n'achemine pas les signaux cellulaires à la deuxième antenne (240).

4. Dispositif selon la revendication 1, dans lequel la logique de commutation (250) comprend :
un commutateur ayant un premier port pour recevoir les premiers signaux non cellulaires à partir de la logique centrale (210), un deuxième port couplé à la première antenne (230), un troisième port et une entrée de commande pour recevoir un signal de sélection d'antenne ; et
une logique de partage d'antenne ayant un premier port pour recevoir les signaux cellulaires à partir de la logique centrale (210), un deuxième port couplé au troisième port du commutateur, un troisième port couplé à la deuxième antenne (240) et une entrée de commande pour recevoir le signal de sélection d'antenne.

5. Dispositif selon la revendication 4, dans lequel le signal de sélection d'antenne est invalidé pour indiquer le mode de partage en réponse à la détection d'un temps d'inactivité associé à la communication des signaux cellulaires.

6. Dispositif selon la revendication 4, comprenant en outre :
une logique d'arbitrage (312) configurée pour invalider de manière sélective le signal de sélection d'antenne en réponse aux informations de programmation de transmission/réception du signal cellulaire.

7. Dispositif selon la revendication 6, dans lequel la logique d'arbitrage (312) est configurée en outre pour régler de manière sélective un paramètre de gain des signaux non cellulaires en réponse au signal de sélection d'antenne.

8. Dispositif selon la revendication 6, dans lequel la logique d'arbitrage (312) est configurée en outre pour valider de manière sélective le signal de sélection d'antenne en réponse à un programme de transmission du premier signal non cellulaire.

9. Dispositif selon la revendication 6, dans lequel la logique d'arbitrage (312) est configurée en outre pour fournir les informations de programmation de transmission/réception du signal cellulaire pour commander une circuiterie associée aux signaux non cellulaires.

10. Procédé de fonctionnement d'un dispositif de communication sans fil (100), le procédé comprenant :
la communication de signaux Bluetooth et Wifi à un autre dispositif par le biais de la première antenne (230) et la communication de signaux cellulaires à l'autre dispositif par le biais de la deuxième antenne (240) durant un mode normal ;
le passage dans un mode de partage d'antenne quand il existe un temps d'inactivité associé à la transmission ou la réception des signaux cellulaires ; et
la communication de signaux Wifi à l'autre dispositif par le biais de la première antenne (230) et la communication de signaux Bluetooth à l'autre dispositif par le biais de la deuxième antenne (240) durant le mode de partage d'antenne ;
dans lequel le passage comprend : la surveillance d'une table de consultation stockant des informations de programmation pour la transmission et la réception des signaux cellulaires pour déterminer si le temps d'inactivité existe.

11. Procédé selon la revendication 10, dans lequel les signaux cellulaires ne sont pas transmis par le biais de la deuxième antenne (240) durant le mode de partage d'antenne.

12. Procédé selon la revendication 10, dans lequel le passage comprend en outre :
la validation d'un signal de sélection d'antenne, en réponse aux informations de programmation, pour lancer le mode de partage d'antenne.

13. Procédé selon la revendication 10, comprenant en outre :
la fourniture des informations de programmation de signal cellulaire pour commander une circuiterie associée aux signaux Bluetooth et Wifi ; et
le réglage sélectif d'un paramètre de gain de la circuiterie de commande en réponse aux informations de programmation de signal cellulaire.
